# EUROPEAN PATENT SPECIFICATION

(11) **EP 4 390 307 B1**
(45) Date of publication and mention of the grant of the patent: **04.02.2026**
(21) Application number: 22215434.6
(22) Date of filing: 21.12.2022
(51) Int. Cl.: G01C 9/22

(54) **INCLINATION MEASURING SYSTEM AND LAND OR SEA-BASED TOWER STRUCTURE COMPRISING INCLINATION MEASURING SYSTEM**
NEIGUNGSMESSSYSTEM UND BODEN- ODER MEERESBASIERTE TURMSTRUKTUR MIT DEM NEIGUNGSMESSSYSTEM
SYSTÈME DE MESURE D'INCLINAISON ET STRUCTURE DE TOUR TERRESTRE OU MARITIME COMPRENANT UN SYSTÈME DE MESURE D'INCLINAISON

(43) Date of publication of application: 26.06.2024
(73) Proprietor: FORCE Technology, 2605 Brøndby (DK)
(72) Inventor: Evensen, Lars, 3300 Frederiksværk (DK); Fuglsang, Mikael, Diemer, 2740 Skovlunde (DK); Egenfeldt, Svend, 3200 Helsinge (DK); Ulf, Larsen, 2300 København S (DK)
(74) Representative: Patrade A/S

(56) References cited:
- EP-A1- 2 482 032
- EP-A1- 3 726 182
- WO-A1-2012/007122
- WO-A1-90/12285
- NL-A- 2 032 789
- US-A- 3 236 535
- US-A- 5 148 018

## Description

### Technical Field

The present invention relates to an inclination measuring system. The invention also relates to a land or sea-based tower structure including the system.

### Background Art

In various fields of technology, tall structures are erected for different purposes.

In the construction industry, tall masts are for instance built in order to be able to place transmitters and receivers in elevated positions in order to increase their range and consequently their coverage.

Pylons designed to support suspended bridges is another example of a tall structure that is commonly erected to fulfil a dedicated purpose. Pylons are commonly built on land. However, pylons are also commonly built at the bottom of the sea or other water.

Another example of a common type of tall structure is a wind turbine. Wind turbines are like pylons often built on land. However, sea-based wind turbines are attracting an ever-increasing interest owing for the favourable wind conditions that are prevailing at sea.

Further, taller and taller buildings are built in the course of urbanisation and strive of utilizing attractive land space more efficiently.

When building or erecting tall structures it is of outmost importance that the structures are correctly built such that no undesired inclination is present. In practice, almost all tall structures are built such that they stand straight and thus extend vertically without leaning in any direction.

As is commonly known, structures may start to lean over time. Such leaning may occur due to various reasons. The foundation of the structure may start to sag leading to that the structure at hand starts to lean. The structure may start to lean when subjected to external tilting forces. For instance, a wind turbine is designed to "catch" the wind in order to extract energy therefrom. In practice, the wind speed is locally reduced as the wind is impinging on surfaces of the wind turbine's rotor. For natural reasons, such local reduction of the windspeed brings about the wind turbine is subjected to large horizontal forces essentially pushing the top of the wind turbine sideways. Hence, a wind turbine typically will have to withstand a large tilting momentum or will else start to lean over time.

Also, masts tend to start inclining over time.

Structures of the above-discussed types are generally designed to withstand wear and tear over a long lifetime. Bridges and towers may stand for hundreds of years whereas a wind turbine is typically designed for a lifetime of about 30 years.

The taller a structure gets the more sensitive it gets to undesired inclinations. Even a very small inclination or leaning of a tall structure may become critical. In a worst-case scenario, a structure may even fall over or break if it starts to lean too much.

For these reasons there are in many jurisdictions a requirement to monitor even the slightest inclination of tall structures in order to be able to detect such inclinations before they reach a level that potentially may be unsafe or even harmful. For instance, in Germany it is required to ensure that a wind turbine does not incline more then 0,25 degrees or else the wind turbine is not allowed to be operated due to legislative requirements. This holds true for any inclination including dynamic loads and not just static inclination in an unloaded situation where there is no significant wind load.

For the above reasons, tall structures are generally employed with some form of system which aims at monitoring any inclination of the structure at hand. Such systems for inclination measurement may utilize different types of sensors to monitor changes in inclination. Typically, high resolution electronic sensors are used. Different types of sensors are available that produces a high accuracy measurement of inclination of a structure to which the sensors are attached. In this regard, electronic inertial sensors, MEMS-based tilt sensors, electrolytic tilt sensors and liquid capacitive inclinometers are all examples of tilt sensors that are capable of delivering high-accuracy tilt or inclination measurement. These types of sensors have in common that they measure very small variations in resistance, capacitance or another electrical property. The measured small variations must then be amplified in order to read out an actual tilt or inclination value. This in turn means that the measurements made will have to be compensated for environmental differences such as changes in temperature and pressure in order to deliver correct measurements.

Moreover, regular calibration is needed since these types of sensors drift. Problems related to drift become more and more outspoken over time, making measurements less accurate.

In structures, such as sea-based wind turbines, which are not easily accessible, calibration is generally a large problem or at least a very costly problem to address.

Another problem resides in that the lifetime of electronic inclination sensors are typically significantly shorter than the lifetime of the tall structure in which they are installed. Thus, replacement is typically needed more than once over the lifetime of a tall structure. A replacement as such is complicated and it is also complicated to correlate a newly installed electronic inclination sensor to the measurements already conducted by the electronic inclination sensor being replaced.

Hence, there is a need for an improved inclination measuring system.

US 5 148 018 A relates to a laser beam levelling device having a vessel with a U-shaped cross section filled with a dark liquid.

WO 90/12285 A1 relates to a spirit level comprising a tubular fluid container partially filled with liquid and having two arms or sides separated by one or more valves operable to prevent liquid flow between the arms.

WO 2012/007122 A1 relates to a medical X-ray system for examining body tissue and comprising an X-ray source configured to generate X-radiation, a detector configured to detect X-radiation that has passed through the body tissue, and a measuring device configured to determine a reference direction, in particular the gravitational direction or a direction from which the gravitational direction can be derived.

US 3 236 535 A relates to an apparatus utilizing two vessels containing mercury mounted along a selected line on a device to be levelled.

EP 3 726 182 A1 relates to an apparatus for measuring a slope change amount of a structure, the apparatus being characterized by including: a bottom body formed in a spherical surface having a predetermined radius of curvature; a ball installed on an upper surface of the bottom body and moving due to a gravitational force; and a camera for imaging the bottom body on which the ball is located.

EP 2 482 032 A1 relates to a universal precise levelling measuring device and a measurement method thereof, comprising: a plate-shaped horizontal base, a round bubble level set at the centre of an upper surface of the base, and three outriggers set on the base, wherein at least one through-hole is set at one end of each of the outriggers far from the base, and a point contact bolt set in the through-hole; the three outriggers are extended in different directions and in the same plane parallel to the base, and included angle of two adjacent outriggers is smaller than 180°.

NL 2 032 789 A relates to a wind turbine tower drum inclination detection method based on a ground 3D laser scanning technology, including the steps: 1) keeping an instrument in a fixed position no less than 3/2 of a tower drum height horizontally from a tower drum, and acquiring point cloud data of a 1/3 circular drum body of a vertical projection of the tower drum; 2) constructing a TIN model of the 1/3 circular drum body, fitting upper and lower centres of the circular tower drum, and extracting tower drum sections; 3) reducing centre coordinates of the sections of the circular tower drum; and 4) calculating longitudinal and transverse inclination components and an inclination rate of the tower drum through the obtained bottom and top centre coordinates of the circular tower drum.

### Summary of the invention

With the above in mind, it is an object of the present invention to provide an improved inclination measuring system as well as a land or sea-based tower structure including the system.

Another object is to provide such an inclination measuring system which has no drift over time.

Another object is to provide such an inclination measuring system which reduces the need for calibration.

Another object is to provide such an inclination measuring system which has a significantly reduced drift over time.

Another object is to provide such an inclination measuring system which has an increased lifetime.

Another object is to provide such an inclination measuring system in which components vital to inclination measurement has an increased lifetime.

Another object is to provide such an inclination measuring system which is easier to install.

Another object is to provide such an inclination measuring system which is more cost-efficient than prior art solutions.

Another object is to provide such an inclination measuring system which is less labour intense throughout its lifetime.

To achieve at least one of the above objects and also other objects that will be evident from the following description, an inclination measuring system having the features defined in claim 1 is provided according to the present inventive concept. A land or sea-based tower structure an inclination measuring system is provided according to claim 13.

Preferred variations of the inventive concept will be evident from the dependent claims.

In specific examples, according to a first aspect, there is provided an Inclination measuring system comprising, a liquid-based indicator, configured to indicate an inclination change thereof by a displacement of liquid in the liquid-based indicator, the liquid-based indicator comprising two liquid columns in liquid communication with each other, each liquid column comprising a liquid volume and defining a liquid surface, a camera device configured to image the respective liquid surfaces of the respective liquid columns and to output image data indicative of the respective liquid surfaces, and a processing device configured to receive the image data, the processing device being configured to register an inclination change of the liquid-based indicator by determining a change of levels of the respective liquid surfaces and to output a signal indicative of the inclination change of the liquid-based indicator.

Hereby an improved inclination measuring system is provided.

The inclination measuring system is designed for, and hence suitable to be used for measuring inclination in any type of structure. However, the inclination measuring system of the present inventive concept is particularly relevant tower structures, i.e. tall structures with a hight significantly larger than a width.

The inclination measuring system is advantageous in that it has no drift or at least a significantly reduced drift. Hence, inclination measuring system need not be calibrated when installed and in use.

Another main advantage resides in that the inclination measuring system has a significantly increased lifetime in comparison to prior art electronic-sensor-based solutions.

Hence, the inclination measuring system is further advantageous in that it typically requires less maintenance and other type of attendance throughout its lifetime.

The inclination measuring system comprises a liquid-based indicator. The liquid-based indicator includes a liquid which is displaceable within the liquid-based indicator. The liquid-based indicator is configured to indicate when its inclination or rotation in relation to the horizontal plane is changed by the liquid therein being displaced.

The liquid-based indicator comprising two liquid columns in liquid communication with each other. The liquid columns are typically vertically extending vessels which are connected to each other at a bottom region thereof via a liquid passage.

The liquid passage may be hose, a pipe or similar. The liquid passage may be integrally formed with the liquid columns. The liquid columns and the passage may be jointly formed by e.g., a U-shaped pipe or similar.

Hence, the liquid of the liquid-based indicator may consequently be redistributed between the liquid columns via the passage in response to an inclination change of the liquid-based indicator.

Each liquid column comprising a liquid volume and defines a liquid surface.

The inclination measuring system comprises a camera device. The camera device may include one or more cameras. The camera device may include more than one camera located at a distance from each other. The camera device may include onboard processing capabilities. The camera device may include image processing capabilities capable of detecting the respective liquid surfaces.

The camera device is configured to image the respective liquid surfaces of the respective liquid columns.

In other words, the camera device is configured to image the liquid columns such that the liquid surfaces are visible or detectable in a field of view or fields of view of the camera device.

The camera device is configured to output image data indicative of the respective liquid surfaces.

The image data indicative of the respective liquid surfaces may include an image or a plurality of images.

The image data indicative of the respective liquid surfaces may include an indication of a level of the respective liquid surfaces.

The image data indicative of the respective liquid surfaces may be in any suitable format. The image data indicative of the respective liquid surfaces may for instance include a numerical value indicative of a level of each liquid surface. The image data indicative of the respective liquid surfaces may for instance include a numerical value indicative of a difference between the respective liquid surfaces.

The inclination measuring system comprises a processing device configured to receive the image data. The processing device is configured to register an inclination change of the liquid-based indicator by determining a change of levels of the respective liquid surfaces. In other words, the processing device is typically configured to determine and monitor a change of levels of the respective liquid surfaces over time to be able to determine a long-term inclination change of the liquid-based indicator.

The processing device is thus configured to process the image data indicative of the respective liquid surfaces to register an inclination change of the liquid-based indicator by determining a change of levels of the respective liquid surfaces. The processing device is consequently configured to process the image data indicative of the respective liquid surfaces in any suitable way by determining a change of levels of the respective liquid surfaces such that an inclination change of the liquid-based indicator is registered. Any suitable strategy for determining a change of levels of the respective liquid surfaces may be used to advantage.

The processing device is configured to output a signal indicative of the inclination change of the liquid-based indicator. The outputted signal may be in any suitable form as long as it is indicative of an inclination change of the liquid-based indicator. The outputted signal may include additional information. The outputted signal may be indicative of an absolute change, a relative change or a change within a certain interval to give a few non-limiting examples. The outputted signal may be indicative of a non-existing change, i.e., a zero change. The outputted signal may be indicative of whether a threshold is exceeded or not. The outputted signal may be a digital signal. The outputted signal may be an analogue signal.

The processing device may be further configured to determine the levels of the respective liquid surfaces by image analysis of the received image data, which is advantageous in that an accurate and robust determination of the respective liquid surfaces may be achieved.

The processing device may be further configured to determine the levels of the respective liquid surfaces by image analysis determining a centre level of a transition from the liquid to the ambient, which is advantageous in that a stringent repeatable determination of the respective liquid surfaces may be achieved.

The processing device may further be configured to output the signal indicative of the inclination change of the liquid-based indicator when a registered inclination change of the liquid-based indicator exceeds a predetermined threshold, which is advantageous in that a signal need only be outputted when needed, i.e., when an inclination is at hand. This may thus result in a reduced data transmission and/or a reduced energy consumption.

The liquid-based indicator may comprise a respective reference mark arranged adjacent to each one of the respective liquid columns and imageable by the camera device, which is advantageous in that the respective liquid surfaces may be related to a fix point such that a stringent repeatable determination of the respective liquid surfaces may be achieved. Thus, as a consequence a change of change of levels of the respective liquid surfaces may be determined in a stringent repeatable way be the processing device.

The respective reference marks may have a high contrast colour with respect to a background thereof.

The processing device may further be configured to determine a respective relative change of the levels of the respective liquid surfaces with respect to the respective reference marks by image analysis of the received image data, which is advantageous in that a change of change of levels of the respective liquid surfaces may be determined in a stringent repeatable way be the processing device.

The respective reference marks may have a design and/or colour which is optimized for being determined through image analysis.

The processing device may further be configured to determine an absolute inclination change based on the determined relative changes of the levels of the respective liquid surfaces, which is advantageous in that the inclination measuring system may be capable of outputting an absolute inclination change which for instance is directly readable be an operator or similar.

The liquid-based indicator may comprise a window positioned in a field of view of the camera device, which is advantageous in that the liquid-based indicator may be enclosed in a protective atmosphere and/or shielded from the ambient while the camera device can image the respective liquid surfaces of the respective liquid columns.

The liquid-based indicator may comprise an illumination device configured to illuminate the liquid-based indicator in the field of view of the camera device, which is advantageous in that camera device may image the respective liquid surfaces of the respective liquid columns irrespective and hence independent of ambient light conditions. Moreover, by utilizing an illumination device configured to illuminate the liquid-based indicator in the field of view of the camera device, light conditions may be optimized and/or tailored to suit the camera device. In other words, light conditions may be optimized to optimize an image quality.

The illumination device may comprise one or more light sources.

The illumination device may comprise any type of suitable light source.

The illumination device may be distributed such that a respective light source illuminates a respective liquid column.

The illumination device may comprise a LED light source, which is advantageous in that a limited amount of heat is generated. Generated heat may otherwise for instance make the liquid to expand which may influence a level of the liquid surface at hand.

The camera device may comprise a respective camera for each liquid column and may be configured to image the respective liquid surfaces, which is advantageous in that the respective liquid surfaces may be imaged in a reliable manner although the liquid columns may be located at a distance from each other.

The liquid-based indicator may comprise a fluid-tight channel extending between a respective gas filled head space above each liquid column, which is advantageous in that evaporation of liquid may be counteracted. Further, by providing a fluid-tight channel extending between a respective gas filled head space above each liquid column it is ensured that the respective liquid columns are kept at the same pressure. Furthermore, by providing a fluid-tight channel extending between a respective gas filled head space above each liquid column the liquid may be protected from contaminations that otherwise may influence the performance of the liquid-based indicator.

The inclination measuring system may comprise a base supporting the liquid-based indicator and the camera device, wherein the base may be adjustable such that a position of the liquid-based indicator and the camera device is adjustable in unison in relation the horizontal plane, which is advantageous in that the liquid-based indicator and the camera device may be levelled such that the respective liquid surfaces appear at desired areas in the field of view of the camera device. Further, when installing the inclination measuring system the initial inclination or reference inclination of the system may be set.

The liquid in the liquid-based indicator may be coloured, which is advantageous in that the respective liquid surfaces may be imaged more easily. Further, a suitable, generally greater, contrast with regard to a background colour may be achieved by utilizing a coloured liquid.

The processing device may be comprised in the camera device, which is advantageous in that a compact system may be achieved. Further, by including the processing device in the camera device an energy consumption of the inclination measuring system may be decreased or limited.

The inclination measuring system may further comprise a transmitter configured to receive the signal indicative of the inclination change of the liquid-based indicator, and to transmit a transmitter signal intended to be received by a remote receiver and indicative of an inclination change of the liquid-based indicator, which is advantageous in that an inclination change may be monitored in a location remote form the inclination measuring system by receiving the transmitter signal.

The transmitter signal may have any suitable format. The transmitter signal may be a digital signal. The transmitter signal may be an analogue signal.

Hence, an inclination change of for instance a wind turbine may be monitored in a location remote form the wind turbine itself by receiving the transmitter signal. Moreover, the inclination of a plurality of wind turbines or other structures may be monitored at a single site by receiving a plurality of transmitter signals emanating from different wind turbines or other structures.

The processing device may be located in a remote location with respect to the liquid-based indicator and the camera device, and the inclination measuring system may further comprise a transmitter and a receiver, wherein the transmitter is configured to receive the image data and to transmit an image signal including the image data, and wherein the receiver is configured to receive the image signal, and wherein the processing device is configured to receive the image signal, thereby receiving the image data. Hence, an image signal including the image data may be sent to a remote location where the processing device is arranged. Thus, parts of the inclination measuring system may be located at a structure which's inclination is to be measured, whereas other parts may be located in a location remote form the structure. Significant advantages may be achieved since the number of parts of the system installed in a not easily accessible structure, such as a sea-based wind turbine, may be reduced. The robustness of the inclination measuring system may thus be increased.

Moreover, the inclination of a plurality of wind turbines or other structures may be monitored at a single site by receiving a plurality of image signals emanating from different wind turbines or other structures.

According to another aspect of the invention, there is provided a land or sea-based tower structure comprising an inclination measuring system according to the first aspect. In general, features of this aspect provide similar advantages as discussed above in relation to the first aspect. Consequently, said advantages will not be repeated in order to avoid undue repetition.

By a "tower structure" is meant any structure or building which is higher than its diameter or width. A tower structure is typically high relative to its surroundings. A tower structure may stand apart or be attached to a larger structure. A tower structure may be fully or partially walled in or of skeleton framework.

Examples of tower structures include, a tower, a pylon, a pilar, a wind turbine, a mast, a flagpole, a building or similar.

According to another example, there is provided an inclination measuring system comprising, a spirit level, a camera device configured to image the spirit level and to output image data indicative of a position of a bubble of the spirit level, and
a processing device configured to receive the image data, the processing device being configured to register an inclination change of the spirit level by determining a change of position of the bubble and to output a signal indicative of the inclination change of the liquid-based indicator.

### Brief Description of the Drawings

The above, as well as additional objects, features and advantages of the present inventive concept, will be better understood through the following illustrative and non-limiting detailed description of preferred variants of the present inventive concept, with reference to the appended drawings, where the same reference numerals will be used for similar elements, wherein:
Fig. 1 conceptually illustrates a sea-based wind turbine in which an inclination measuring system according to the present inventive concept is installed.
Fig. 2 conceptually illustrates a perspective view of a section of the wind turbine in Fig. 1 at a location where the inclination measuring system is installed.
Fig. 3 conceptually illustrates a perspective view of an inclination measuring system according to the present inventive concept.
Fig. 4 conceptually illustrates a perspective partial view of the inclination measuring system of Fig. 3.
Fig. 5 conceptually illustrates a side view of the inclination measuring system of Figs. 3 and 4.
Fig. 6 is a perspective view of an inclination measuring system with further details conceptually illustrated.
Fig. 7 conceptually illustrates a mast in which an inclination measuring system according to the present inventive concept is installed, and remote resources in communication with the inclination measuring system.

### Detailed Description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

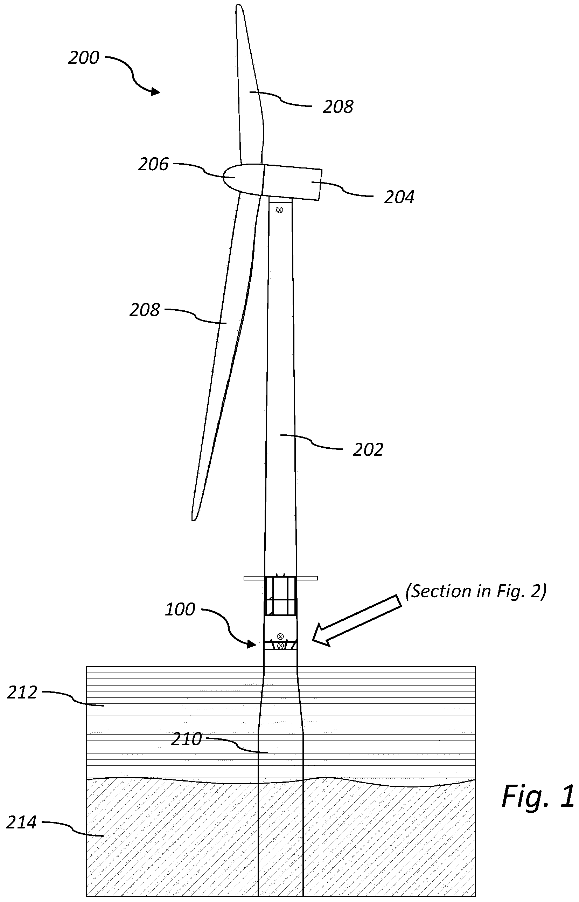

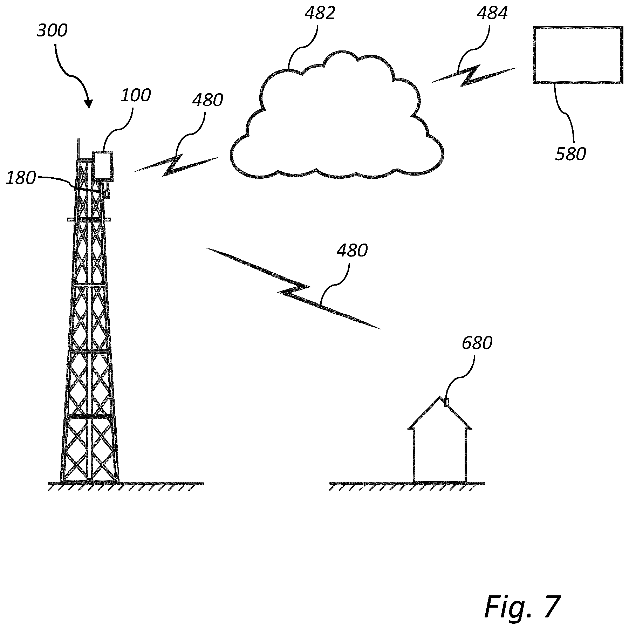

Initially an inclination measuring system 100 will be described with references to Figs. 1-6. The inclination measuring system 100 will be described where the inclination measuring system 100 is installed in a wind turbine 200. However, the inclination measuring system 100 may be used in a number of different applications and application areas. An example of this will be described below with reference to Fig. 7 in which an inclination system 100 is installed in a mast 300. The described example is however to be considered as non-limiting, meaning that the inclination measuring system 100 may equally well be used in any tower structure such as a tower, a pylon, a pilar, a wind turbine, a mast, a flagpole, a building or similar.

The wind turbine 200 depicted in Fig. 1 includes a wind turbine tower 202. The wind turbine tower 202 has a diameter of about 6 meters. The wind turbine tower 202 of Fig. 1 reaches about 100 meters above the level of the sea 212. The wind turbine 200 depicted in Fig. 1 is consequently a sea-based wind turbine 200 which is installed offshore at the seabed 214 of the sea 212. It is however to be understood that the wind turbine 200 may be installed or located in any kind of water 212 or at land. The wind turbine tower 202 of the wind turbine 200 depicted in Fig. 1 is supported by a monopile or mono pillar 210. The monopile 210 has a height of about 55 meters. In waters 212 with a depth of about 20 meters, the monopile 210 will typically reach down 20-30 meters into the seabed 214. The monopile 210 is typically driven into the seabed 214 from a vessel while being kept in a vertical direction. Thus, the monopile 210 is driven into the seabed 214 with no or essentially no inclination.

The wind turbine 200 depicted in Fig. 1 further comprises a rotor formed of a hub 206 and three rotor blades 208. Any suitable number of rotor blades 208 may be used to advantage.

The wind turbine 200 of Fig. 1 further comprises a nacelle 204 joining the rotor and the wind turbine tower 202. The nacelle 204 typically comprises a gearbox, a generator for producing electrical power, and a brake assembly for breaking and preventing the rotor from rotating when so desired.

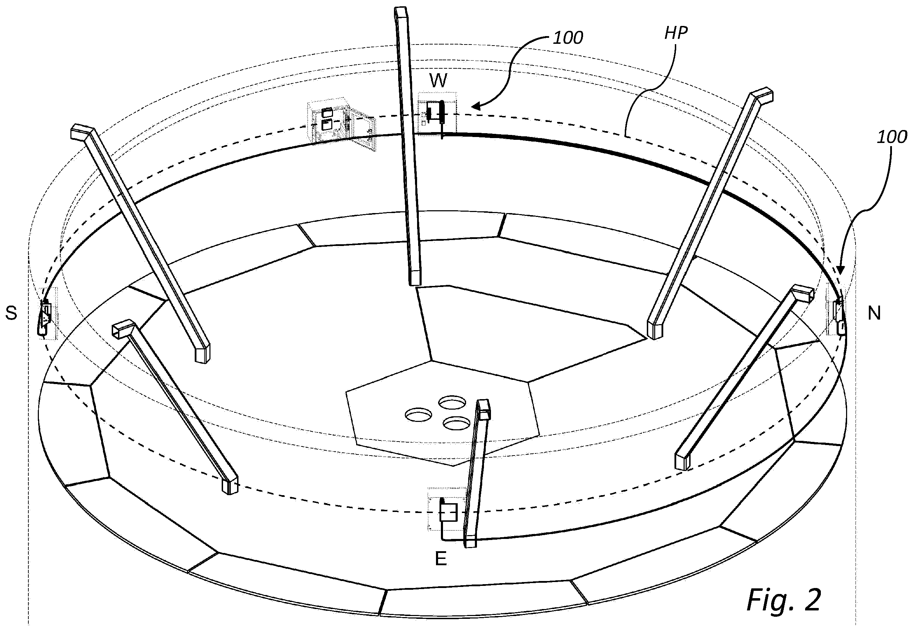

In Fig. 2, a section of the monopile 210 of Fig. 1 is depicted. The location of the section of Fig. 2 is indicated by an arrow in Fig. 1. The section is depicted in the upper part of the monopile 210 in Fig.1 at a location where an inclination measuring system 100 is installed. In other words, the depicted section of Fig. 2 illustrates a location of the monopile 210 at a location just below the transition to the wind turbine tower 202. More specifically, the depicted section in Fig. 2 illustrates how two inclination measuring systems 100 are installed in the wind turbine 200. However, it is to be understood that the any suitable number of inclination measuring systems 100 may be installed in the wind turbine 200. However, it is further to be understood that such inclination measuring systems 100 may be installed in any suitable location and not just at the upper part of the monopile 210. Preferred locations for installing the inclination measuring system 100 are indicted in Fig 1. by circles with an X therein. The lowermost indicated location is the location illustrated in Fig. 2. Apart from that location, a preferred location for the inclination measuring system 100 is indicated at the lower part of the wind turbine tower 202 and another preferred location for the inclination measuring system 100 is indicated at the upper part of the wind turbine tower 202. By additionally installing an inclination measuring system 100 at the upper part of the wind turbine tower 202, conclusions regarding a defection of the wind turbine tower 202 may additionally be drawn.

The depicted inclination measuring systems 100 are arranged orthogonally in relation to each other. Further the inclination measuring systems 100 are arranged such that one inclination measuring system 100 runs along a North-South direction N, S, and such that one inclination measuring systems 100 runs along an East-West direction E, W. The inclination measuring systems 100 may also be arbitrarily arranged to define any angular difference between each other.

The inclination measuring systems 100 of Fig. 1 are further arranged such that they span a horizontal plan HP. By letting the inclination measuring systems 100 span the horizontal plane HP a minimum horizontal extension of the inclination measuring systems 100 is required. However, owing from the design of the inclination measuring systems 100 the inclination measuring systems 100 does not have to span the horizontal plane HP although this is preferred. The inclination measuring systems 100 may for instance be arranged in a slightly tilted manner and still function as desired.

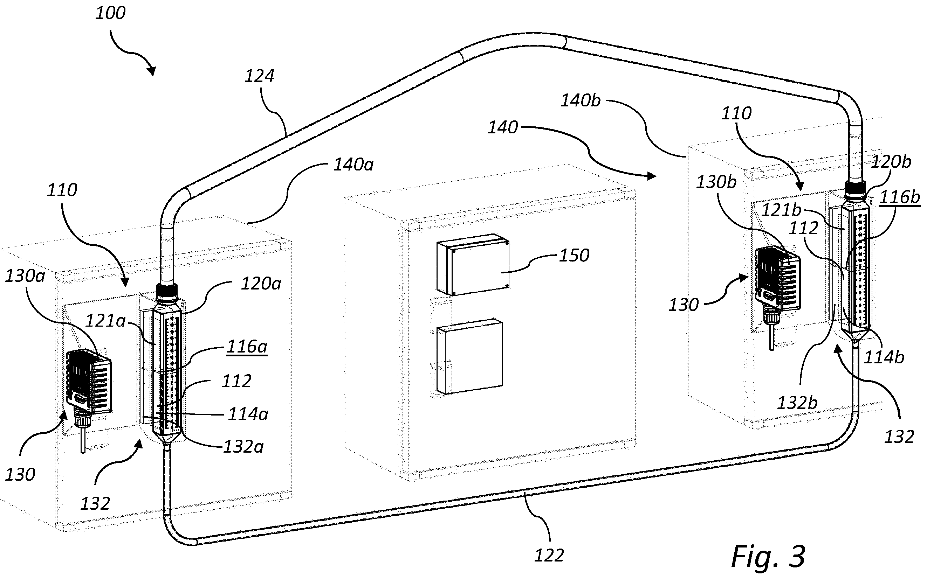

Now also referring to Fig. 3. In Fig. 3 one of the two inclination measuring systems 100 of Fig. 2 is further detailed. It is to be noted that the inclination measuring systems 100 detailed in Fig. 3 is drawn in a schematic manner, where the respective parts of the inclination measuring systems 100 are drawn close to each other in order to increase the legibility of Fig. 3. It is however to be understood that the inclination measuring systems 100 is in practice arranged as indicated in Fig. 2, where the inclination measuring systems 100 are distributed throughout the upper part of the monopile 210.

As can be seen in Fig. 3, the inclination measuring system 100 comprises a liquid-based indicator 110. The liquid-based indicator 110 includes a liquid 112. The liquid 112 is displaceable within the liquid-based indicator 110. The liquid 112 may to advantage be an anti-freezing liquid. By utilizing an anti-freezing liquid the inclination measuring system 100 may be used at temperatures below zero with a reduced risk of malfunctioning. The liquid 112 may comprise alcohol. The liquid 112 may comprise glycol. The liquid 112 may be a mixture of alcohol and water. The liquid 112 may be a mixture of glycol and water. The liquid 112 may be any kind of suitable liquid.

The liquid-based indicator 110 is configured to indicate when its inclination or rotation in relation to the horizontal plane HP is changed by the liquid 112 therein being displaced.

For this reason, the liquid-based indicator 110 comprises two liquid columns 120a-b in liquid communication with each other. The liquid columns 120a-b are typically vertically extending vessels. However, the liquid columns 120a-b may have any suitable shape.

The depicted liquid columns 120a-b of Fig. 3 are connected to each other at bottom regions thereof via a liquid a passage 122 in form of a hose.

The liquid passage 122 may however be of any suitable form including but not limited to a hose, a pipe, a channel, a conduit or similar. The liquid passage 122 may be integrally formed with the liquid columns 120a-b. The liquid columns 120a-b and the liquid passage 122 may be jointly formed by e.g., a U-shaped pipe or similar. The liquid passage 122 is shown is a simplified manner owing form the layout of Fig. 3. In practice the liquid passage 122 is significantly longer as shown in Fig. 2.

Hence, the liquid 112 of the liquid-based indicator 110 may be redistributed between the liquid columns 120a-b via the liquid passage 122 in response to an inclination change of the liquid-based indicator 110.

Each liquid column 120a-b further has a liquid volume 114a-b and defines a liquid surface 116a-b. As is understood, when the liquid 112 of the liquid-based indicator 110 is redistributed between the liquid columns 120a-b via the liquid passage 122 in response to an inclination change of the liquid-based indicator 110, the levels of the respective liquid surfaces 116a-b will change accordingly.

Each one of the depicted liquid columns 120a-b also have a gas filled head space 121a-b. The gas filled head spaces 121a-b may be filled with air, however, it should be understood that the gas filled head spaces 121a-b may be filled with any kind of gases and/or gas mixtures. The gas filled head spaces 121a-b may be filled with an inert gas such as nitrogen.

The gas filled head spaces 121a-b of Fig. 3 are further connected to each other via a fluid-tight channel 124. In Fig. 3, the fluid-tight channel 124 is formed of a hose. Thus, the fluid-tight channel 124 may extend between the respective gas filled head space 121a-b. The fluid-tight channel 124 may extend between the respective gas filled head space 121a-b above the liquid surface 116a-b in each liquid column 120a-b. The fluid-tight channel 124 is shown is a simplified manner owing form the layout of Fig. 3. In practice the liquid passage 122 is typically significantly longer as it will generally span the distance between the respective liquid columns 120a-b.

The fluid-tight channel 124 serves a number of purposes. The fluid-tight channel 124 allows for equal pressurization in each liquid column 120a-b. This means that any pressure influence on a level of the liquid surfaces 116a-b may be prevented or counteracted.

The fluid-tight channel 124 prevents or at least counteracts evaporation of the liquid 112 in the sense that evaporated liquid is prevented or counteracted form leaving the liquid-based indicator 110. In other words, evaporated liquid of the liquid 112 may be re-joined with the liquid 112 and consequently not become lost to the ambient.

The fluid-tight channel 124 may be inclined. The fluid-tight channel 124 may be inclined towards one of the liquid columns 120a-b. The fluid-tight channel 124 may be inclined towards both liquid columns 120a-b. The fluid-tight channel 124 may thus promote evaporated liquid from the liquid columns 120a-b to condensed therein. The fluid-tight channel 124 may more specifically promote evaporated liquid from the liquid columns 120a-b to be condensed in the fluid-tight channel 124 and to be led back into the either one or both of the liquid columns 120a-b.

The depicted inclination measuring system 100 of Fig. 3 further comprises a camera device 130. The camera device 130 may include one or more cameras. The camera device 130 may include more than one camera located at a distance from each other. The camera device 130 may comprise a respective camera for each liquid column 120a-b and may be configured to image the respective liquid surfaces 116a-b. In Fig. 3, the camera device 130 includes two cameras 130a-b. More specifically, the camera device 130 includes a camera 130a for imaging the liquid surface 116a of liquid column 120a and a camera 130b for imaging the liquid surface 116b of liquid column 120b. However, one camera may to advantage image liquid surfaces 116a-b of liquid columns 120a-b.

The camera device 130 may include onboard processing capabilities. The camera device 130 may further include image processing capabilities capable of detecting the respective liquid surfaces 116a-b.

The camera device 130 is configured to image the respective liquid surfaces 116a-b of the respective liquid columns 120a-b. Specifically, the camera device 130 may be configured to image the liquid columns 120a-b such that the liquid surfaces 116a-b are visible or detectable in a field of view or fields of view of the camera device 130.

The camera device 130 is configured to output image data indicative of the respective liquid surfaces 116a-b. The outputted image data indicative of the respective liquid surfaces 116a-b may be raw image data which consequently represents an image or more than one image of the respective liquid surfaces 116a-b. The outputted image data indicative of the respective liquid surfaces 116a-b may be processed data which may or may not represent an image or more than one image of the respective liquid surfaces 116a-b. The outputted image data may be in any suitable format as long as it is indicative of the respective liquid surfaces 116a-b.

The camera device 130 may further be associated with an illumination device 132. The illumination device 132 may facilitate detection of the liquid surfaces 116a-b by the camera device 130. The illumination device 132 may be configured to illuminate the liquid-based indicator 110 in the field of view of the camera device 130. As can be seen in Fig. 3, the depicted inclination measuring system 100 comprises an illumination device 132 in form a LED light source 132a-b for each liquid column 120a-b. That is, a LED light source 132a is illuminating liquid column 120a within the field of view of the camera 130a and the other LED light source 132b is illuminating liquid column 120b within the field of view of the camera 130b. A single LED light source may however illuminate liquid columns 120a-b jointly. Any type of suitable light source may be used to advantage.

The liquid-based indicator 110 may comprise a window positioned in a field of view of the camera device 130. If the liquid-based indicator 110 is enclosed in a protective atmosphere and/or shielded from the ambient while the camera device 130 is outside of the protective atmosphere, such window positioned in the field of view of the camera device 130 may allow the camera device 130 to image the respective liquid surfaces 116a-b of the respective liquid columns 120a-b of the liquid-based indicator 110.

As depicted in Fig. 3, the inclination measuring system 100 may include a housing 140. More specifically, in Fig. 3 a respective housing 140a-b is provided for each half of the inclination measuring systems 100. The housing 140 may enclose the camera device 130, the illumination device 132 and/or the liquid column(s) 120a and/or 120b. The housing 140 may thus define an enclosed space. Such enclosed space may preferably be a fluid tight space. Thus, such enclosed space may prevent disturbances from the surroundings of the inclination measuring system 100, such disturbances may, e.g., be reflections and/or emitted light from surrounding surfaces and/or devices. Such enclosed space may further prevent ingression of substances from the ambient. For instance, such enclosed space formed by the housing 140 may prevent moisture, particles, and salt to reach the components of the inclination measuring system 100.

The housing 140 and the enclosed space thereof may also be kept at a pressure slightly above the ambient pressure. Such slight overpressure inside the housing 140 may counteract ingression of substances or air from the ambient. The housing 140 may to advantage be filled with an inert gas such as nitrogen. The housing 140 may thus be filled with an inert gas and have a slight overpressure with respect to the ambient. The housing 140 may be filled with an inert gas and have no overpressure. The housing 140 may have an overpressure and comprise no or any kind of gas, e.g, air.

Hence, the housing 140 may further facilitate reliable detection of the liquid surfaces 116a-b by the camera device 130. The housing 140 may also counteract corrosion of the components of the inclination measuring system 100.

The inclination measuring system 100 includes a processing device 150. The processing device 150 is configured to receive image data from the camera device 130. The processing device 150 is configured to determine the levels of the respective liquid surfaces 116a-b. The processing device 150 is configured to determine the levels of the respective liquid surfaces 116a-b by image analysis of the received image data.

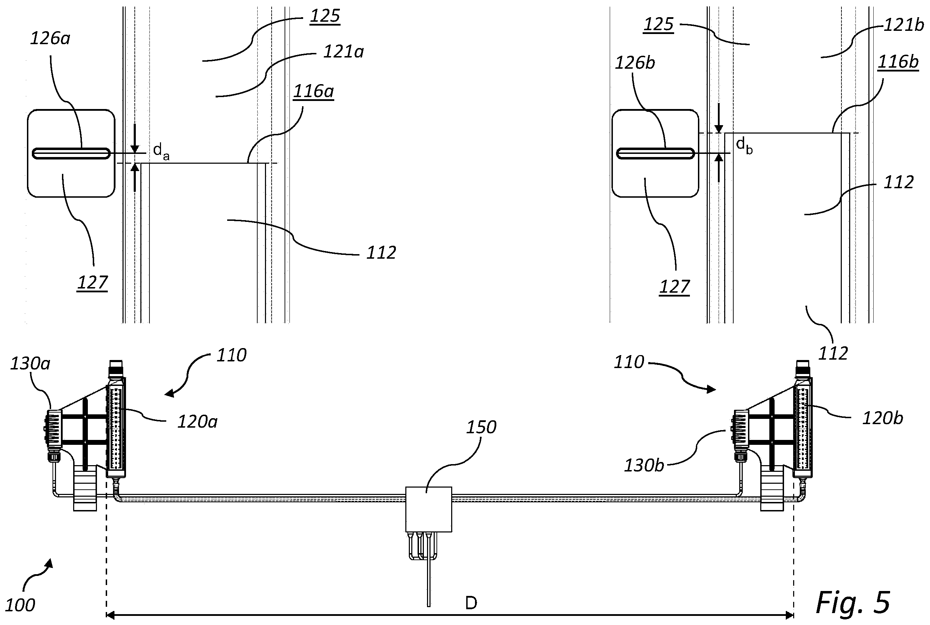

The processing device 150 is more specifically configured to register an inclination change of the liquid-based indicator 110 by determining a change of levels of the respective liquid surfaces 116a-b. The processing device 150 may determine a change of levels of the respective liquid surfaces 116a-b by using any suitable strategy. This will be elaborated on further below in conjunction to describing Fig. 5.

The processing device 150 is further configured to output a signal indicative of the inclination change of the liquid-based indicator 110. That is, the processing device 150 is configured to output a signal which in any suitable way includes information indicative of an inclination change of the liquid-based indicator 110. The outputted signal may include an indication pertaining to a change of levels of the respective liquid surfaces 116a-b. The outputted signal may include a value or a plurality of values indicative of a change of levels of the respective liquid surfaces 116a-b. The outputted signal may include a respective value indicative of a respective a change of levels of the respective liquid surfaces 116a-b. The outputted signal may have any suitable format.

The processing device 150 may also be configured to output the signal indicative of the inclination change of the liquid-based indicator 110 when a registered inclination change of the liquid-based indicator 110 exceeds a predetermined threshold. In this way, the processing device 150 need only to output the signal indicative of the inclination change when an inclination change actually is at hand. Thus, the number of calculations and/or energy needed by the processing device 150 may be reduced.

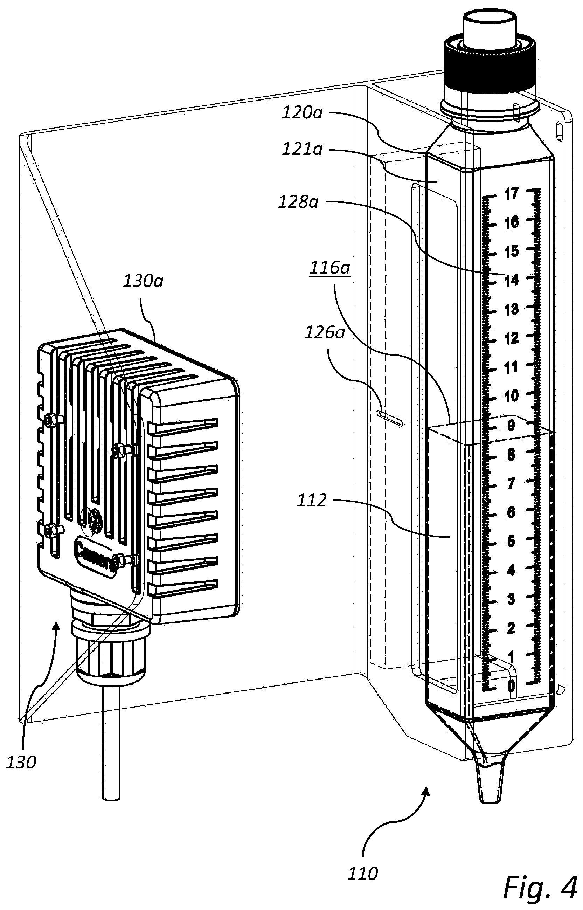

Now also referring to Fig. 4. In Fig. 4, a partial enlargement of the liquid-based indicator 110 of the inclination measuring system 100 from Fig. 3 is depicted. More specifically, selected details of the left part of the inclination measuring system 100 is depicted in Fig. 4. In the following, details of the left part of the inclination measuring system 100 will be discussed, however, the below discussion is equally valid for the right part of the inclination measuring system 100 is depicted in Fig. 4.

It can be seen in Fig. 4 that the liquid column 120a may further comprise a readable scale 128a. The readable scale 128a may be an arbitrary readable scale 128a. The readable scale 128a may be for associating the level of the liquid surface 116a with a number, letter, symbol, and/or any combination of these.

Fig. 4 also shows that the liquid-based indicator 110 comprises a reference mark 126a. A refence mark 126a is provided for each one of the liquid columns 121a-b. The reference mark 126a may be arranged adjacent to the liquid column 120a. The reference mark 126a is imageable by the camera device 130 together with the liquid surface 116a. In Fig. 4 the reference mark 126a is imageable by the camera 130a of the camera device 130 together with the liquid surface 116a. The reference mark 126 may be associated with an initial level of the liquid surface 116. The reference mark 126 may also be used as an arbitrary reference mark configured to define an initial distance between the liquid surface 116 and the reference mark 126.

Now also referring to Fig. 5. Fig. 5 depicts the inclination measuring system 100 of Figs. 3-4 from a side view, and also depicts enlarged portions of the areas near the liquid surfaces 116a-b and respective reference marks 126a-b.

As previously described, the camera device 130 may include image processing capabilities capable of detecting the liquid surface 116 of the liquid 112. The camera device 130 may further output image data indicative of the liquid surface 116. Also, as previously described, the image data indicative of the liquid surface 116 may include an image or a plurality of images. The image data indicative of the liquid surface 116 may include an indication of a level of the liquid surface 116.

The processing device 150 may therefore be configured to determine a respective relative change of the levels of the respective liquid surfaces 116a-b with respect to the respective reference marks 126a-b by image analysis of the received image data from the camera device 130. The processing device 150 may also be configured to determine an absolute inclination change based on the determined relative changes of the levels of the respective liquid surfaces 116a-b.

As previously described, the image data indicative of the respective liquid surfaces 116a-b may further be in any suitable format. The image data indicative of the respective liquid surfaces 116a-b may for instance include a numerical value indicative of a level of each liquid surface 116a-b. The image data indicative of the respective liquid surfaces 116a-b may for instance include a numerical value indicative of a difference between the respective liquid surfaces 116a-b. Any suitable strategy for determining a change of levels of the respective liquid surfaces 116a-b may be used to advantage.

The respective reference marks 126a-b may further have a high contrast colour with respect to a background 127 thereof. The respective reference marks 126a-b may also have a design and/or colour which is optimized for being determined through image analysis.

The liquid 112 in the liquid-based indicator 110 may also have a high contrast colour with respect to the background 125 of the liquid 112 viewed by the camera device 130. The liquid 112 may e.g. be pink, however, it should be understood that the liquid 112 may have any colour. The colour of the background 125 of the liquid 112 may e.g. be white, however, it should be understood that the background 125 of the liquid 112 may have any colour. The colour of the liquid 112 and the colour of the background 125 of the liquid 112 may facilitate detection of the liquid surfaces 116a-b by the camera device 130.

The camera device 130 may typically include a digital camera. More specifically, the camera device 130 may typically include a digital camera 130a-b for each liquid column 121a-b. As is known in the art, a digital camera typically includes an image sensor comprising a number of pixels arranged in what may be regarded lines and columns. Hence, the output of the camera device 130 may comprise a plurality of horizontal lines representing the imaged field of view. If more than one digital camera 130a-b is used, the output of the camera device 130 may comprise more than one set of a plurality of horizontal lines where each set represents the imaged field of view of a respective digital camera 130a-b.

Thus, a plurality of horizontal lines may be associated with a specific feature in the field of view of the camera device 130. Each reference mark 126a-b may, e.g., be represented in a finite number of horizontal lines or as a finite number of horizontal lines. The finite number of horizontal lines constituting each reference mark 126a-b may be thus be detected and extracted from the imaged field of view by the high-contrast colour of each reference mark 126a-b with respect to a background 127 thereof.

Further, the finite number of horizontal lines constituting each reference mark 126a-b may be interpolated to define a position of each reference mark 126a-b represented with a single horizontal line. The single horizontal line of each reference mark 126a-b may for instance be constructed through averaging the finite number of horizontal lines constituting each reference mark 126a-b such that one essentially middle or central line represents each reference mark 126a-b position. The single horizontal line of each reference mark 126a-b may be defined to be represented by a top or bottom horizontal line of the finite number of horizontal lines constituting each reference mark 126a-b. As long as the same representation of the respective reference marks 126a-b are used consistent measurements of inclination changes may be realized.

Similarly, the position of each liquid surface 116a-b may be defined thorough identifying a transition between the horizontal lines corresponding to the background 125 of the liquid 112 and the horizontal lines corresponding to the liquid 112. The high-contrast colour of the liquid 112, with respect to the background 125 of the liquid 112, may facilitate identifying a set of horizontal lines corresponding to each transition between the liquid 112 and the background 125 of the liquid 112. The identified set of horizontal lines corresponding to each transition between the liquid 112 and the background 125 of the liquid 112 may be interpolated to a single horizontal line representing the position of each transition, i.e. the position of each liquid surface 116a-b. The single horizontal line representing the position of each liquid surface 116a-b may be constructed through averaging the set of horizontal lines corresponding to each transition between the liquid 112 and the background 125 of the liquid 112 such that one essentially middle line represents the position of each liquid surface 116a-b. The single horizontal line representing the position of each liquid surface 116a-b may be defined to be represented by a top or bottom horizontal line from the set of horizontal lines corresponding to each transition between the liquid 112 and the background 125 of the liquid 112. As long as the same representation of the respective liquid surfaces 116a-b are used consistent measurements of inclination changes may be realized.

As illustrated in Fig. 5, the definite position of the liquid surfaces 116a-b and the reference marks 126a-b may define a respective distance dₐ and d_{b} between each liquid surface 116a-b and the corresponding reference mark 126a-b. The distances dₐ and d_{b} may further be processed by the processing device 150. The processing device 150 may be configured to calculate an inclination of the inclination measuring system 100 using the known distances dₐ and d_{b}. The processing device 150 may be configured to calculate an inclination of the inclination measuring system 100 using the known distances dₐ, d_{b}, and a pre-known system specific distance D between the liquid columns 120a-b. The processing device 150 may be configured to calculate an inclination of the inclination measuring system 100 using trigonometry or a lookup table or a combination of these. The lookup table may contain information on how the distances dₐ, d_{b}, and/or D are related to the inclination of the inclination measuring system 100. The processing device 150 may further be configured to calculate an inclination of the inclination measuring system 100 using any suitable mathematical calculations, formulas, and/or rules by using the known distances dₐ, d_{b} and/or D.

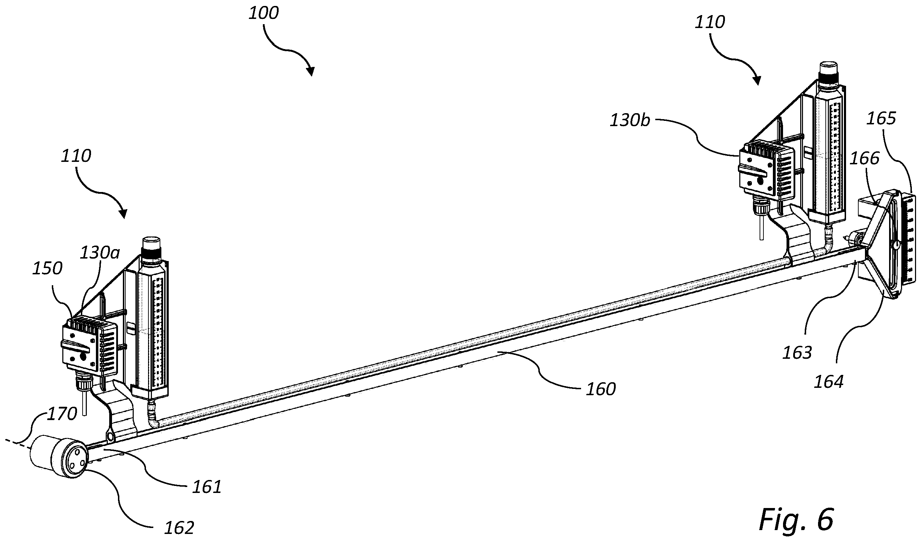

Now also referring to Fig. 6. The processing device 150 may be comprised in the camera device 130 as illustrated in Fig. 6. The processing device 150 in the camera device 130 may be configured to determine a respective relative change of the levels of the respective liquid surfaces 116a-b with respect to the respective reference marks 126a-b by image analysis of collected image data from the camera device 130. To avoid undue repetition, reference is made to the above mentions of the processing device 150. In other words, the processing device 150 in the camera device 130 may be configured to have any or all of the functionalities of the processing device 150 when described separately.

Fig. 6 depicts a similar inclination measuring system 100 as compared to the inclination measuring system 100 of Figs. 3-5 in a perspective. The inclination measuring system 100 of Fig. 6 includes some further details which are conceptually illustrated. However, the inclination measuring system 100 of Fig. 6 is largely analogous to the inclination measuring system 100 of Figs 3-5 why only relevant differences will be described to avoid undue repetition. As seen in Fig. 6, the depicted inclination measuring system 100 comprises a base 160 supporting the liquid-based indicator 110 and the camera device 130. The depicted base 160 is adjustable such that a position of the liquid-based indicator 110 and the camera device 130 are adjustable in unison in relation the horizontal plane HP.

The depicted base 160 comprises a first end 161. The first end 161 of the base 160 may be pivotably attached to a wall or any object. The first end 161 of the base 160 may have an axle receiving part 162 configured to be attached to an axle or any object such that a partial rotation of the base 160 around an axis 170 may be possible. In other words, a hinge may be formed by the axle receiving part 162 and the axis 170 as illustrated in Fig. 6. It should be understood that the rotation of the base 160 may be achieved in any manner, and that the position of the axis 170 in Fig. 6 is illustrated in a non-limiting way and may be positioned anywhere along the base 160.

The depicted base 160 comprises a second end 163. The second end 163 of the base 160 may be adjustably attached to an adjustment arrangement 164. The adjustment arrangement 164 of the second end 163 of the base 160 may be configured to receive a wall-mounted object 165 such as a fixed scale. The adjustment arrangement 164 of the second end 163 of the base 160 and the wall-mounted object 165 may be releasably attached via a locking mechanism 166, e.g., a screw, however, it should be understood that the adjustment arrangement 164 of the second end 163 of the base 160 and the wall-mounted object 165 may be adjustably attached using any suitable locking mechanism 166. The adjustable end, i.e. the second end 163, of the base 160 may be used to level the liquid-based indicator 110 and the camera device 130 attached to the base 160 such that the respective liquid surfaces 116a-b appear at desired areas in the field of view of the camera device 130. The base 160 of the inclination measuring system 100 being adjustable may further facilitate installation of the inclination measuring system 100 such that an initial inclination or reference inclination of the system may be set. Further, by re-levelling the level the liquid-based indicator 110 and the camera device 130 the inclination measuring system 100 may be reset and hence account for an accumulated inclination.

The base 160 may comprise any number of ends. The base 160 may have multiple adjustment arrangements 164. The second end 163 may be the first end 161, and vice versa. The adjustment arrangement 164 may be comprised in the axle receiving part 162. The locking mechanism 166 may be comprised in the adjustment arrangement 164. The locking mechanism 166 may be comprised in the wall-mounted object 165. The wall-mounted object 165 may be a wall or a major structure. Any of the first end 161 and/or second end 163 of the base 160 may be attached to a wall, a floor, and/or a roof surface.

Now referring to Fig. 7. In Fig. 7, an inclination measuring system 100 is installed in a tower structure represented by a mast 300. The inclination measuring system 100 is of the type described above and will consequently not be described again to avoid undue repetition. In Fig. 7 remote resources may be in communication with the inclination measuring system 100. The inclination measuring system 100 may for that reason further comprise a transmitter 180 configured to receive the signal indicative of the inclination change of the liquid-based indicator 110, and to transmit a transmitter signal 480 intended to be received by remote receivers 580, 680. The transmitter signal 480 may be transmitted to a digital cloud 482. The digital cloud 482 may be a cloud storage and/or a cloud for processing. The digital cloud 482 may transmit a signal 484 to be received by a remote receiver 580. The remote receiver 580 will thereby indirectly receive the transmitter signal 480.

The transmitter signals 480, 484 may have any suitable format. The transmitter signals 480, 484 may be digital signals. The transmitter signals 480, 484 may be analogue signals.

The remote receivers 582, 680, and/or digital cloud 482 may be configured to receive a plurality of transmitter signals 480, 484 emanating from different tower structures. The inclination of a plurality of tower structures may thus be monitored at a single site 580, 680 and/or digital cloud 482.

The remote receivers 580, 680 and/or digital cloud 482 may comprise the processing device 150. The inclination measuring system 100 may further comprise a transmitter 180 configured to transmit an image signal including the image data such that an image signal including the image data may be sent to a remote location where the processing device 150 is arranged. Thus, parts of the inclination measuring system 100 may be located at a tower structure which's inclination is to be measured, whereas other parts may be located in a location remote form the tower structure.

The remote receivers 580, 680 and/or digital cloud 482 may comprise the processing device 150 and may be configured to receive a plurality of transmitter signals 480, 484 emanating from different tower structures, the image signals including the image data of a plurality of tower structures may thus be processed at a single site 580, 680 and/or digital cloud 482.

The inclination measuring system 100 may be used for a large variety of tower structures. Such tower structures may be land or sea-based. The inclination measuring system 100 may for instance be used for monitoring inclinations of a tower, a pylon, a pilar, a wind turbine 200, a mast 300, a flagpole, a building or similar. As stated above, by a "tower structure" is meant any structure or building which is higher than its diameter or width. A tower structure is typically high relative to its surroundings. A tower structure may stand apart or be attached to a larger structure. A tower structure may be fully or partially walled in or of skeleton framework.

It will be appreciated that the present inventive concept is not limited to the variants and examples shown. Several modifications and variations are thus conceivable within the scope of the invention which thus is defined by the appended claims.

## Claims

1. Inclination measuring system (100) comprising,
a liquid-based indicator (110), configured to indicate an inclination change thereof by a displacement of liquid (112) in the liquid-based indicator (110), the liquid-based indicator (110) comprising:
two liquid columns (120a-b) in liquid communication with each other, each liquid column (120a-b) comprising a liquid volume (114a-b) and defining a liquid surface (116a-b), and
a respective reference mark (126a-b) arranged adjacent to each one of the respective liquid columns (120a-b),
a camera device (130) configured to image the respective liquid surfaces (116a-b) of the respective liquid columns (120a-b) and the respective reference marks (126a-b), and to output image data indicative of the respective liquid surfaces (116a-b) and the respective reference marks (126a-b), and
a processing device (150) configured to:
receive the image data,
determine the levels of the respective liquid surfaces (116a-b) by image analysis of the received image data,
register an inclination change of the liquid-based indicator (110) by determining a respective relative change of the levels of the respective liquid surfaces (116a-b), with respect to the respective reference marks (126a-b) by image analysis of the received image data, and
output a signal indicative of the inclination change of the liquid-based indicator (110).

2. The inclination measuring system (100) according to claim 1,
wherein processing device is further configured to output the signal indicative of the inclination change of the liquid-based indicator (110) when a registered inclination change of the liquid-based indicator (110) exceeds a predetermined threshold.

3. The inclination measuring system (100) according to claim 1,
wherein the processing device (150) is further configured to determine an absolute inclination change based on the determined relative changes of the levels of the respective liquid surfaces (116a-b).

4. The inclination measuring system (100) according to any one of the preceding claims, wherein the liquid-based indicator comprises a window positioned in a field of view of the camera device.

5. The inclination measuring system (100) according to any one of the preceding claims, wherein the liquid-based indicator (110) comprises an illumination device (132) configured to illuminate the liquid-based indicator (110) in the field of view of the camera device (130).

6. The inclination measuring system (100) according to any one of the preceding claims, wherein the camera device (130) comprises a respective camera for each liquid column (120a-b) and is configured to image the respective liquid surfaces (116a-b).

7. The inclination measuring system (100) according to any one of the preceding claims, wherein the liquid-based indicator (110) comprises a fluid-tight channel (124) extending between a respective gas filled head space (121a-b) above each liquid column (120a-b).

8. The inclination measuring system (100) according to any one of the preceding claims, wherein the inclination measuring system (100) comprises a base (160) supporting the liquid-based indicator (110) and the camera device (130), wherein the base (160) is adjustable such that a position of the liquid-based indicator (110) and the camera device (130) is adjustable in unison in relation the horizontal plane (HP).

9. The inclination measuring system (100) according to any one of the preceding claims, wherein the liquid (112) in the liquid-based indicator (110) is coloured.

10. The inclination measuring system (100) according to any one of the preceding claims, wherein the processing device (150) is comprised in the camera device (130).

11. The inclination measuring system (100) according to any one of the preceding claims, wherein the inclination measuring system (100) further comprises a transmitter (180) configured to receive the signal indicative of the inclination change of the liquid-based indicator (110), and to transmit a transmitter signal (480) intended to be received by a remote receiver (482, 580, 680) and indicative of an inclination change of the liquid-based indicator (110).

12. The inclination measuring system (100) according to any one of claims 1-9, wherein the processing device (150) is located in a remote location with respect to the liquid-based indicator (110) and the camera device (130), and wherein the inclination measuring system (100) further comprises a transmitter (180) and a receiver,
wherein the transmitter (180) is configured to receive the image data and to transmit an image signal including the image data, and
wherein the receiver is configured to receive the image signal, and
wherein the processing device (150) is configured to receive the image signal, thereby receiving the image data.

13. Land or sea-based tower structure (200, 300) comprising an inclination measuring system (100) according to any one of the preceding claims.

## Patentansprüche

1. Neigungsmesssystem (100), umfassend:
eine flüssigkeitsbasierte Anzeige (110), die so konfiguriert ist, dass sie eine Neigungsänderung davon durch eine Verlagerung von Flüssigkeit (112) in der flüssigkeitsbasierten Anzeige (110) anzeigt, wobei die flüssigkeitsbasierte Anzeige (110) umfasst:
zwei Flüssigkeitssäulen (120a-b), die miteinander in Flüssigkeitsverbindung stehen, wobei jede Flüssigkeitssäule (120a-b) ein Flüssigkeitsvolumen (114a-b) umfasst und eine Flüssigkeitsoberfläche (116a-b) definiert, und
eine jeweilige Referenzmarkierung (126a-b), die benachbart zu jeder der jeweiligen Flüssigkeitssäulen (120a-b) angeordnet ist,
eine Kameravorrichtung (130), die so konfiguriert ist, dass sie die jeweiligen Flüssigkeitsoberflächen (116a-b) der jeweiligen Flüssigkeitssäulen (120a-b) und die jeweiligen Referenzmarkierungen (126a-b) abbildet und Bilddaten ausgibt, die die jeweiligen Flüssigkeitsoberflächen (116a-b) und die jeweiligen Referenzmarkierungen (126a-b) anzeigen, und
eine Verarbeitungsvorrichtung (150), die so konfiguriert ist, dass sie:
die Bilddaten empfängt,
die Pegel der jeweiligen Flüssigkeitsoberflächen (116a-b) durch Bildanalyse der empfangenen Bilddaten bestimmt,
eine Neigungsänderung der flüssigkeitsbasierten Anzeige (110) durch Bestimmen einer jeweiligen relativen Änderung der Pegel der jeweiligen Flüssigkeitsoberflächen (116a-b) in Bezug auf die jeweiligen Referenzmarkierungen (126a-b) durch Bildanalyse der empfangenen Bilddaten registriert, und
ein Signal ausgibt, das die Neigungsänderung der flüssigkeitsbasierten Anzeige (110) anzeigt.

2. Neigungsmesssystem (100) nach Anspruch 1, wobei die Verarbeitungsvorrichtung weiter so konfiguriert ist, dass sie das Signal ausgibt, das die Neigungsänderung der flüssigkeitsbasierten Anzeige (110) anzeigt, wenn eine registrierte Neigungsänderung der flüssigkeitsbasierten Anzeige (110) einen vorbestimmten Schwellenwert überschreitet.

3. Neigungsmesssystem (100) nach Anspruch 1, wobei die Verarbeitungsvorrichtung (150) weiter so konfiguriert ist, dass sie eine absolute Neigungsänderung auf der Grundlage der bestimmten relativen Änderungen der Pegel der jeweiligen Flüssigkeitsoberflächen (116a-b) bestimmt.

4. Neigungsmesssystem (100) nach einem der vorstehenden Ansprüche, wobei die flüssigkeitsbasierte Anzeige ein Fenster umfasst, das in einem Sichtfeld der Kameravorrichtung positioniert ist.

5. Neigungsmesssystem (100) nach einem der vorstehenden Ansprüche, wobei die flüssigkeitsbasierte Anzeige (110) eine Beleuchtungsvorrichtung (132) umfasst, die so konfiguriert ist, dass sie die flüssigkeitsbasierte Anzeige (110) in dem Sichtfeld der Kameravorrichtung (130) beleuchtet.

6. Neigungsmesssystem (100) nach einem der vorstehenden Ansprüche, wobei die Kameravorrichtung (130) eine jeweilige Kamera für jede Flüssigkeitssäule (120a-b) umfasst und so konfiguriert ist, dass sie die jeweiligen Flüssigkeitsoberflächen (116a-b) abbildet.

7. Neigungsmesssystem (100) nach einem der vorstehenden Ansprüche, wobei die flüssigkeitsbasierte Anzeige (110) einen flüssigkeitsdichten Kanal (124) umfasst, der sich zwischen einem jeweiligen gasgefüllten Kopfraum (121a-b) über jeder Flüssigkeitssäule (120a-b) erstreckt.

8. Neigungsmesssystem (100) nach einem der vorstehenden Ansprüche, wobei das Neigungsmesssystem (100) eine Basis (160) umfasst, die die flüssigkeitsbasierte Anzeige (110) und die Kameravorrichtung (130) trägt, wobei die Basis (160) so einstellbar ist, dass eine Position der flüssigkeitsbasierten Anzeige (110) und der Kameravorrichtung (130) in Bezug auf die horizontale Ebene (HP) gemeinsam einstellbar ist.

9. Neigungsmesssystem (100) nach einem der vorstehenden Ansprüche, wobei die Flüssigkeit (112) in der flüssigkeitsbasierten Anzeige (110) gefärbt ist.

10. Neigungsmesssystem (100) nach einem der vorstehenden Ansprüche, wobei die Verarbeitungsvorrichtung (150) in der Kameravorrichtung (130) umfasst ist.

11. Neigungsmesssystem (100) nach einem der vorstehenden Ansprüche, wobei das Neigungsmesssystem (100) weiter einen Sender (180) umfasst, der so konfiguriert ist, dass er das Signal empfängt, das die Neigungsänderung der flüssigkeitsbasierten Anzeige (110) anzeigt, und dass er ein Sendersignal (480) sendet, das von einem entfernten Empfänger (482, 580, 680) empfangen werden soll und eine Neigungsänderung der flüssigkeitsbasierten Anzeige (110) anzeigt.

12. Neigungsmesssystem (100) nach einem der Ansprüche 1 - 9, wobei sich die Verarbeitungsvorrichtung (150) an einem entfernten Ort in Bezug auf die flüssigkeitsbasierte Anzeige (110) und die Kameravorrichtung (130) befindet und wobei das Neigungsmesssystem (100) weiter einen Sender (180) und einen Empfänger umfasst,
wobei der Sender (180) so konfiguriert ist, dass er die Bilddaten empfängt und ein Bildsignal sendet, das die Bilddaten einschließt, und
wobei der Empfänger so konfiguriert ist, dass er das Bildsignal empfängt, und
wobei die Verarbeitungsvorrichtung (150) so konfiguriert ist, dass sie das Bildsignal empfängt und dadurch die Bilddaten empfängt.

13. Boden- oder meerbasierte Turmstruktur (200, 300) umfassend ein Neigungsmesssystem (100) nach einem der vorstehenden Ansprüche.

## Revendications

1. Système de mesure d'inclinaison (100) comprenant,
un indicateur à base de liquide (110), configuré pour indiquer un changement d'inclinaison de celui-ci par un déplacement de liquide (112) dans l'indicateur à base de liquide (110), l'indicateur à base de liquide (110) comprenant :
deux colonnes de liquide (120a-b) en communication liquide entre elles, chaque colonne de liquide (120a-b) comprenant un volume de liquide (114a-b) et définissant une surface de liquide (116a-b), et
une marque de référence (126a-b) respective agencée de manière adjacente à chacune des colonnes de liquide (120a-b) respectives,
un dispositif de caméra (130) configuré pour imager les surfaces de liquide (116a-b) respectives des colonnes de liquide (120a-b) respectives et les marques de référence (126a-b) respectives, et produire en sortie des données d'image indicatives des surfaces de liquide (116a-b) respectives et des marques de référence (126a-b) respectives, et
un dispositif de traitement (150) configuré pour :
recevoir les données d'image,
déterminer les niveaux des surfaces de liquide (116a-b) respectives par analyse d'image des données d'image reçues,
enregistrer un changement d'inclinaison de l'indicateur à base de liquide (110) en déterminant un changement relatif respectif des niveaux des surfaces de liquide (116a-b) respectives, par rapport aux marques de référence (126a-b) respectives par analyse d'image des données d'image reçues, et
produire en sortie un signal indicatif du changement d'inclinaison de l'indicateur à base de liquide (110).

2. Système de mesure d'inclinaison (100) selon la revendication 1, dans lequel le dispositif de traitement est en outre configuré pour produire en sortie le signal indicatif du changement d'inclinaison de l'indicateur à base de liquide (110) lorsqu'un changement d'inclinaison enregistré de l'indicateur à base de liquide (110) excède un seuil prédéterminé.

3. Système de mesure d'inclinaison (100) selon la revendication 1, dans lequel le dispositif de traitement (150) est en outre configuré pour déterminer un changement d'inclinaison absolu sur la base des changements relatifs déterminés des niveaux des surfaces de liquide (116a-b) respectives.

4. Système de mesure d'inclinaison (100) selon l'une quelconque des revendications précédentes, dans lequel l'indicateur à base de liquide comprend une fenêtre positionnée dans un champ de vision du dispositif de caméra.

5. Système de mesure d'inclinaison (100) selon l'une quelconque des revendications précédentes, dans lequel l'indicateur à base de liquide (110) comprend un dispositif d'éclairage (132) configuré pour illuminer l'indicateur à base de liquide (110) dans le champ de vision du dispositif de caméra (130).

6. Système de mesure d'inclinaison (100) selon l'une quelconque des revendications précédentes, dans lequel le dispositif de caméra (130) comprend une caméra respective pour chaque colonne de liquide (120a-b) et est configuré pour imager les surfaces de liquide (116a-b) respectives.

7. Système de mesure d'inclinaison (100) selon l'une quelconque des revendications précédentes, dans lequel l'indicateur à base de liquide (110) comprend un canal étanche aux fluides (124) s'étendant entre un espace de tête rempli de gaz (121a-b) respectif au-dessus de chaque colonne de liquide (120a-b).

8. Système de mesure d'inclinaison (100) selon l'une quelconque des revendications précédentes, dans lequel le système de mesure d'inclinaison (100) comprend une base (160) supportant l'indicateur à base de liquide (110) et le dispositif de caméra (130), dans lequel la base (160) est ajustable de sorte qu'une position de l'indicateur à base de liquide (110) et du dispositif de caméra (130) soit ajustable à l'unisson par rapport au plan horizontal (HP).

9. Système de mesure d'inclinaison (100) selon l'une quelconque des revendications précédentes, dans lequel le liquide (112) dans l'indicateur à base de liquide (110) est coloré.

10. Système de mesure d'inclinaison (100) selon l'une quelconque des revendications précédentes, dans lequel le dispositif de traitement (150) est compris dans le dispositif de caméra (130).

11. Système de mesure d'inclinaison (100) selon l'une quelconque des revendications précédentes, dans lequel le système de mesure d'inclinaison (100) comprend en outre un émetteur (180) configuré pour recevoir le signal indicatif du changement d'inclinaison de l'indicateur à base de liquide (110), et pour transmettre un signal d'émetteur (480) destiné à être reçu par un récepteur distant (482, 580, 680) et indicatif d'un changement d'inclinaison de l'indicateur à base de liquide (110).

12. Système de mesure d'inclinaison (100) selon l'une quelconque des revendications 1 à 9, dans lequel le dispositif de traitement (150) est situé dans un emplacement distant par rapport à l'indicateur à base de liquide (110) et au dispositif de caméra (130), et dans lequel le système de mesure d'inclinaison (100) comprend en outre un émetteur (180) et un récepteur,
dans lequel l'émetteur (180) est configuré pour recevoir les données d'image, et pour transmettre un signal d'image incluant les données d'image, et
dans lequel le récepteur est configuré pour recevoir le signal d'image, et
dans lequel le dispositif de traitement (150) est configuré pour recevoir le signal d'image, recevant ainsi les données d'image.

13. Structure de tour terrestre ou maritime (200, 300) comprenant un système de mesure d'inclinaison (100) selon l'une quelconque des revendications précédentes.
